# EUROPEAN PATENT SPECIFICATION

(11) **EP 1 740 291 B1**
(45) Date of publication and mention of the grant of the patent: **12.11.2008**
(21) Application number: 05722103.8
(22) Date of filing: 18.03.2005
(51) Int. Cl.: B01D 53/22, B01D 69/14, B01D 71/60

(54) **MEMBRANE FOR SEPARATING CO2 AND PROCESS FOR THE PRODUCTION THEREOF**
MEMBRAN ZUR ABTRENNUNG VON CO2 UND HERSTELLUNGSVERFAHREN DAFÜR
MEMBRANE DESTINEE A SEPARER LE CO2 ET SON PROCEDE DE FABRICATION

(30) Priority: 22.03.2004 NO 20041199; 30.11.2004 NO 20041199
(43) Date of publication of application: 10.01.2007
(73) Proprietor: NTNU Technology Transfer AS, 7491 Trondheim (NO)
(72) Inventor: HÄGG, May-Britt, Dep. of Chemical Engineering, 7491 Trondheim (NO); KIM, Taek-Joong, Dep. of Chemical Engineering, 7491 Trondheim (NO); LI, Baoan, Dep. of Chemical Engineering, 7491 Trondheim (NO)
(74) Representative: LEITZINGER OY
(86) International application number: PCT/NO2005/000098
(87) International publication number: WO 2005/089907

(56) References cited:
- US-A- 5 131 927
- US-B1- 6 315 968
- US-B1- 6 579 331
- KIM T-J. ET AL: 'Novel Fixed-Site Carrier Polyvinylamine Membrane for Carbon Dioxide Capture' JOURNAL OF POLYMER SCIENCE: PART B: POLYMER PHYSICS vol. 42, 2004, pages 4326 - 4336, XP002988895
- DATABASE WPI Week 200306, Derwent Publications Ltd., London, GB; Class A88, AN 2003-060011, XP002988896 & CN 1 363 414 A (UNIV TIANJIN) 14 August 2002
- QUINN R. ET AL: 'New facilitated transport membranes for the separation of carbon dioxide from hydrogen and methane' JOURNAL OF MEMBRANE SCIENCE vol. 104, 1995, pages 139 - 146, XP004041329

## Description

### FIELD OF INVENTION

The present invention relates to novel fixed-site-carrier composite membranes and a process for producing the same, as well as the use of such membranes for separation of carbon dioxide (CO₂) from gas streams.

### BACKGROUND OF INVENTION

During the last couple of decades, concern for our global environment has brought into focus the need for CO₂ from anthropogenic sources being captured and brought into storage. Industry will in the future have to comply with strict regulations on CO₂-emissions, hence separation and recovery of CO₂ from gas streams have become of vital importance for industry from the viewpoint of environment and energy.

It is furthermore desirable to capture and separate CO₂ from various types of gas streams like fuel gas, biogas, natural gas, synthesis gas and breathing etc. that constitute a part of all kind of combustions, petrochemical industry, biogas production and life support systems.

In general, CO₂ may be separated from gas mixtures of H₂, CO, N₂, 02 and CH₄ by reversible absorption methods employing various chemical and/or physical solvents. As the conventional process of treating and separating CO₂ is highly energy consuming, the cost as well as the increased demand of environmental protection bring about a need for new processes with energy efficient and more selective gas treating technology.

The use of a membrane for separation is suggested as a method consuming lower energy, see for example references 1 and 2 mentioned below.

A lot of research has been performed in order to obtain membranes having both high permeability and selectivity, as well as being stable and durable.

An approach to overcome the above limitations has been developed by casting carriers directly into the polymeric structure of the membranes. These so-called fixed-site-carrier (FSC) membranes have carriers covalently bonded to the polymer backbone and the carriers have a restricted mobility.

CN-A-1363414 discloses the use of FSC membranes for the purpose of separating CO₂ from gases like N₂, O₂, CO and CH₄. This publication discloses a process for preparing a composite membrane to separate carbon dioxide gas from a gas mixture by hollow or flat sheet membranes of polysulfone, polyacrylonitrile, or polyether sulfone through dipping the membrane in polyvinylamine solution for 5-60 minutes, cross-linking with 5-50 % glutaraldehyde solution for 5-40 minutes and in a solution of sulphuric acid or hydrochloric acid for 5-30 minutes, followed by drying and washing with water.

US 6,131,927 discloses a method for producing a composite gas separation membrane by treating the gas separation layer of the composite membrane with a treating agent that ionically bonds to the gas separation membrane layer of the treated composite membrane.

### SUMMARY OF INVENTION

It has now surprisingly been found that the use of FSC membranes similar to those reported in CN-A-1363414 and fluoride-comprising compounds as cross-linking agents, controlling the molecular weight and possibly swelling the membranes in water, results in a remarkable increase in selectivity for CO₂/CH₄, while the high permeability is maintained. The same high selectivity will be documented for CO₂ compared to gases with properties like that of CH₄; i.e. N₂, O₂, CO.

It is an object of the present invention to provide membranes for the facilitated transport of CO₂.

Another object of the invention is to provide membranes achieving both high permeabilities and high selectivities for CO₂ over gases like CH₄, N₂, O₂, H₂, CO.

Still another object of the invention is to provide such membranes, which are stable and durable.

These and other objects are achieved in a first aspect of the invention by a membrane comprising a support structure coated with crosslinked polyvinylamine, wherein the crosslinking agent is a compound comprising fluoride. The membrane may also be swelled in water vapour.

In another aspect, the invention provides a process for producing a membrane as defined above, by preparing polyvinlyamine with a predetermined molecular weight comprising a high degree of amination; coating said polyvinylamine on a support to obtain a membrane; crosslinking the membrane with a compound comprising fluoride; and possibly swelling the crosslinked membrane in water vapour.

In a further aspect, the invention comprises the use of a membrane as defined above, for separation of CO₂ from gas mixtures.

### BRIEF DESCRIPTION OF THE DRAWING

Further objects, features and advantages of the invention will appear from the following description of several embodiments of the invention with reference to examples and the attached drawings in which:
Fig. 1 is a schematic diagram of an experimental setup for gas permeation measurement;
Fig. 2 is a diagram over the effect of molecular weight of PVAm on ideal selectivity of CO₂/CH₄;
Fig. 3 is a schematic diagram over a proposed mechanism of facilitated transport in the fixed-site-carrier membrane;
Fig. 4 is a diagram over the influence of water on the permeation;
Fig. 5 is a schematic diagram over a proposed role of fluoride ion in facilitated transport;
Fig. 6 is a diagram over the effect of molecular weight of PVAm on permeance; and
Fig. 7 is a diagram indicating the possible effect of gas pressure on permeance.

### DESCRIPTION OF EMBODIMENTS OF THE INVENTION

### PREPARATION OF MEMBRANES

Fixed-site-carrier (FSC) membranes were prepared by coating or casting polyvinylamine (PVAm) on various supports such as flat sheet membranes of polyethersulfone (PES), polyacrylonitrile (PAN), cellulose acetate (CA) and polysulfone (PSO). The PVAm cast on the support was crosslinked by various methods using glutaraldehyde, hydrochloric acid, sulphuric acid and ammonium fluoride. The effect of molecular weight of PVAm and feed pressure on the permeance and selectivity was also investigated. The permeance and selectivity of the membranes were measured in water vapour swollen conditions.

### Acrylamide polymerization

The polymerization of acrylamide (CH₂=CH-CO-NH₂; Merck) was carried out according to well-known procedures (see reference 3, below) using ammonium persulfate ((NH₄)₂S₂O₈) and sodium sulphite (Na₂SO₃) as initiators. Persulfate was decomposed by sulphite ion as the reducing agent, and the polymerization included the three basic steps; initiation, chain propagation and chain termination. The polymerization was allowed to proceed at 45°C for 5 h and 55°C for 2 h. The molecular weight of the resulting polyacrylamide (PAA) was determined by measuring the viscosity of the diluted polymer solution. The intrinsic viscosity of PAA in water was determined by using an Ubbelohde viscometer.
PAA with different molecular weight could be obtained by controlling the concentration of initiators. The obtained PAA solution was pale yellowish, but clear and very viscous, which depended on molecular weight and concentration of PAA.

### Preparation of polyvinylamine by Hofmann reaction of polyacrylamide

The Hofmann reaction was suggested as a quick and convenient method of preparing PVAm from PAA by Tanaka et al. (see references 5-7). After examination and extent investigation of Hofmann reaction, Archari et al. (see reference 4) proposed that PVAm could be prepared from PAA by the Hofmann reaction with a high degree of amination (meaning more than 90 %) keeping the extent of side reactions to a low level by careful control of reaction parameters. The amino group content in PVAm was measured to be over 90 mole %. The obtained product was a hygroscopic white solid. The final polymer was dissolved in water to a suitable concentration (5-10%) for membrane casting. The average molecular weight of PVAm was determined by the following relation: [η]/(dL·g⁻¹) = 6.2·10⁻³ M_{η}^{0.88} where [η] is the intrinsic viscosity in 0.01 M aqueous NaOH/0.1 M aqueous NaCl water at 25°C (see references 4 and 7).

Main reaction: R-CO-NH₂ + NaOCl + 2 NaOH → RNH₂ + Na₂CO₃ + NaCl + H₂O

### Membrane preparation

Two microporous polysulfone flat sheet support structures or membranes (PSO) were tested: one with a molecular weight cut-off (MWCO) of 20,000 (from Danish Separation Systems AS (DSS)) and one with MWCO of 30,000 (from Osmonics Vista Operation). The following supports were also tested: polyethersulfone (PES, MWCO 10,000) cellulose acetate (CA, MWCO 20,000) and polyacrylonitrile (PAN, MWCO 75,000) (all three from Osmonics Vista Operation).

The support membrane was cut into suitable pieces and taped to a clean, levelled glass plate. The casting polymer solution of PVAm was poured on the support, and film thickness adjusted by using a casting knife. The gap between the casting knife and the support membrane was set to approximately 20µm - thinner membranes can be made by adjusting the casting knife. The casting polymer solution was evaporated at room temperature for at least 6 h.

A layer of PVAm (MW ∼34 000) was clearly formed on the polysulfone membrane from DSS having a MWCO of about 20,000. The thickness of the layer was about 5-10 µm; hence some of the solution had sifted down into the support.

Meanwhile the PVAm (MW 39 000) layer was hardly visible for membranes coated on polysulfone membranes from Osmonics (MWCO=30,000). It was observed that the PVAm sifted down into the support membrane and below the membrane, probably because of the fact that the molecular weight of the PVAm was too low for the pores of the membrane. Consequently, there should be a reasonable difference between the average molecular weight of PVAm and the molecular weight cut-off of the support structure. Such a difference may be larger than about 10,000, such as larger than about 15,000, for example larger than about 20,000. In this case, it is also possible to obtain and maintain a defectfree dense layer of the selective PVAm membrane or layer. Any voids or openings in the PVAm layer of the membrane will disturb the selection properties of the membrane.

The dried cast membranes were crosslinked by different procedures:
(1) Glutaraldehyde (50%, 30 min);
(2) Glutaraldehyde (50%, 30 min), and then H₂SO₄ (pH=1, 10-30 min);
(3) NH₄F (0.5M, 2 h);
(4) Glutaraldehyde (50%, 30 min), and then NH₄F (0.5 M, 2 h);
(5) H₂SO₄ (pH=1, 10-30 min) or HCl (pH=1, 10-30).

Procedure (2) above, is according to the crosslinking disclosed in CN-A-1363414.

Care was taken to ensure that the membrane was levelled during drying and crosslinking processes in order to obtain an even and defect-free membrane. The crosslinked membranes were stored in a chamber saturated with water vapour.

Another method of producing a permselective membrane permeable and selective for CO₂ may be the following: A bundle of hollow fibres of a suitable support structure material, as those mentioned above, is formed. A layer of PVAm is formed at the outside of each hollow fibre by immersing the fibres in a bath comprising a solution of PVAm. After some time, the bundle of hollow fibres is removed and allowed to dry at room temperature for at least 6 hours. Thus, a layer of PVAm was formed at the outside of each hollow fibre. The PVAm was then crosslinked by the procedures described above.

### Membrane testing

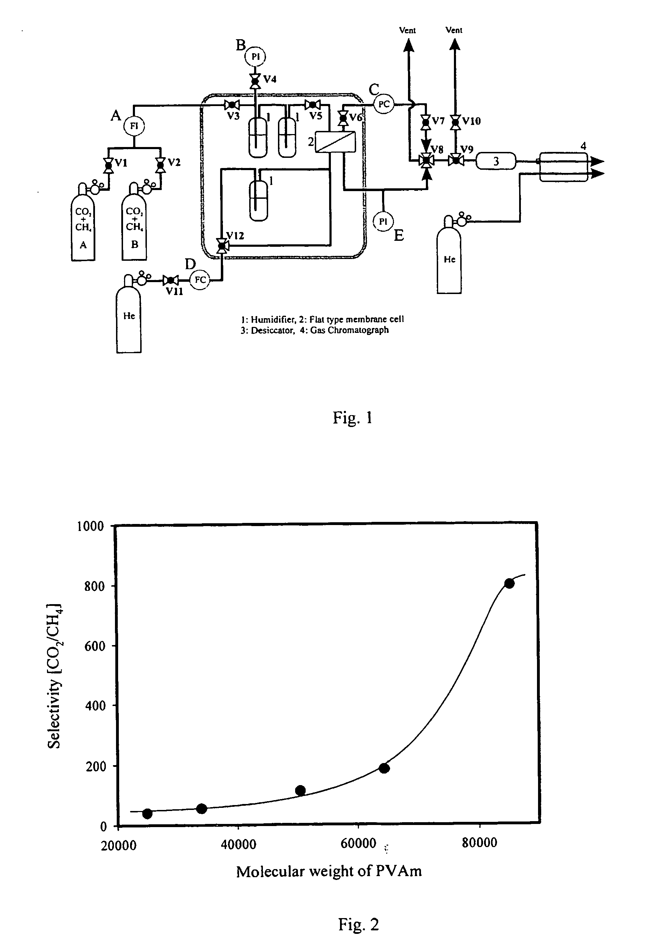

Permeability of the membranes was measured with an apparatus equipped with a humidifier, see Fig. 1.

Fig. 1 shows an experimental setup for gas permeation measurements. The chosen gases may be mixed in any ratios in a gas flow line A, in which flow, pressures and temperature are controlled. The gas mixture is lead to humidifiers in tanks I where it bubbles through water, and then to a membrane separation cell 2. Either the retentate stream C, or the permeate stream E, may be lead to a gas chromatograph (GC) 4 for analysis of the composition. The gas is dried by desiccator 3 before going to the GC. Helium is used as carrier gas. The various gas flows are controlled by valves V1 to V12. Moreover, the abbreviations FI, FC, PI and PC in circles are flow indicator (FI), flow controller (FC), pressure indicator (PI) and pressure controller (PC), respectively.

A membrane was placed on a porous metal disk in a flat type membrane cell 2 and was sealed with rubber O-rings.

All experiments were conducted in a constant temperature environment and the experiment temperature range was between 25-35°C and the pressure difference between the feed and the permeate sides was 2-4 bar.

The permeance (flux) was calculated as P/l in the unit m³ (STP)/(m² bar h). The flux was found to be strongly dependent on the thickness of the membrane. For the membranes reported herein, the thickness was ∼20µm. When the thickness is brought down to at least 1/10 of this, permeation is expected to increase correspondingly by 10 times.

Permselectivity results of PVAm membranes cast on different support materials are compared in Table 1. As can be seen, PSO supported membranes showed much higher selectivity of CO₂ over CH₄. CA, PAN and PES supported membranes showed high permeance, but their selectivity was small. Osmonics PSO which had no visible PVAm layer showed lower permeance as well as lower selectivity than DSS PSO. The DSS PSO support seemed to be the most suitable support for the composite membrane and was therefore chosen in the further investigations.

**Table 1**

| Comparison of membranes on different support materials in permselectivity^{a,b} | | | | | |
|---|---|---|---|---|---|
| Support | Polysulfone (DSS) | Polysulfone (Osmonics) | Cellulose acetate | Polyacrylonitrile | Polyethersulfone |
| CO₂ permeance^{c} | 0.00837 | 0.0063 | 0.099 | 0.0327 | 0.00388 |
| α (CO₂/CH₄) | 1143 | 26.9 | 17.3 | 5.1 | 6.5 |

| | | | | | |
|---|---|---|---|---|---|
| ^{a}Membrane preparation: Cast PVAm solution on supports, dried at room temperature, crosslinked with NH₄F, stored in chamber saturated with water vapour. ^{b}All the data measured at 2 bar and room temperature. ^{c}Permeance, P/l, in units of m³ (STP)/m² bar h. | | | | | |

The results according to Table 1 may be explained as follows: The crosslinking with NH₄F was possibly more easily performed on a support structure where the difference of the MWCO for the support and the MW of the PVAm were equal to or higher than about 20,000. This may explain the difference between the PSO from DSS, Osmonics and the PES; CH₄ is more efficiently withheld where the crosslinking has been successful. It appears to be difficult to form and crosslink a selective layer both on CA and PAN. Thus, it seemed to be difficult to restrict the permeation of CH₄. The flux and selectivity shown for CO₂ using these two materials for support, show that an effective selective film was not formed on the top.

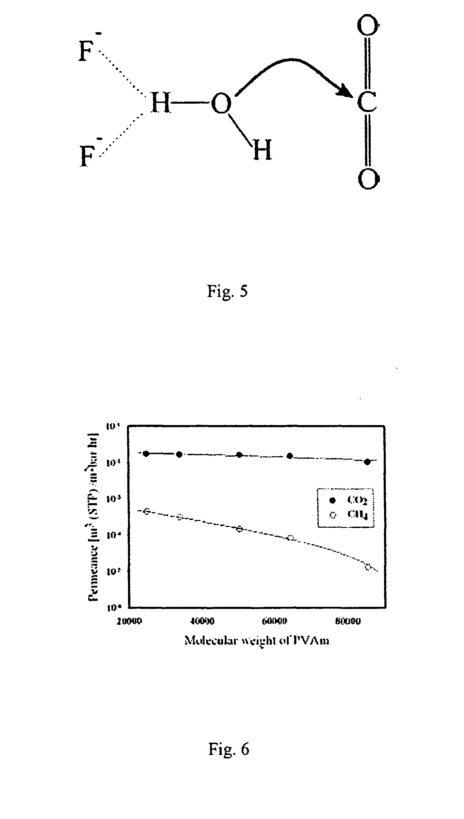

For the same crosslinking condition, an increase in molecular weight of polyvinylamine resulted in a significant decrease in permeation for CH₄ and a remarkable increase in the selectivity as shown in Fig. 6. This corresponds clearly to molecular weight, and when this was more than 70,000, the increase of selectivity was remarkable. This is shown in Fig. 2 where the effect of molecular weight of PVAm on ideal selectivity of CO₂/CH₄ at 35°C, 3 bar, is plotted. The membrane preparation used in this experiment is cast PVAm solution on DSS PSO, dried at room temperature, and crosslinked with NH₄F.

The PVAm/PSO membranes were tested for two months and did still maintain the high selectivity of CO₂/CH_{4.}

The results of different crosslinking methods are shown in Table 2. Among the five crosslinking methods, the crosslinking with NH₄F resulted in a surprisingly high selectivity.

**Table 2**

| Comparison of methods of crosslinking in permselectivity for PVAm membranes cast on PSO support^{a,b} | | | | | |
|---|---|---|---|---|---|
| Method of crosslinking | H₂SO₄ | HCl | NH₄F | Glutaraldehyde + H₂SO₄ (CN-A-1363414) | Glutaraldehyde + NH₄F |
| CO₂ permeance^{c} | 0.00567 | 0.00755 | 0.00837 | 0.00321 | 0.0372 |
| α (CO₂/CH₄) | 19.0 | 13.5 | 1143 | 21.6 | 12.0 |

| | | | | | |
|---|---|---|---|---|---|
| ^{a}Membrane preparation: cast PVAm solution on DSS PSO, dried at room temperature, crosslinked with different methods, stored in chamber saturated with water vapour. ^{b}All the data measured at 2 bars and room temperature. ^{c}Permeance, P/l, in units of m³ (STP)/m²bar hr. | | | | | |

The membrane crosslinked by ammonium fluoride showed the best results and the ideal selectivity of CO₂/CH₄ was over 1000. This was a much unexpected result.

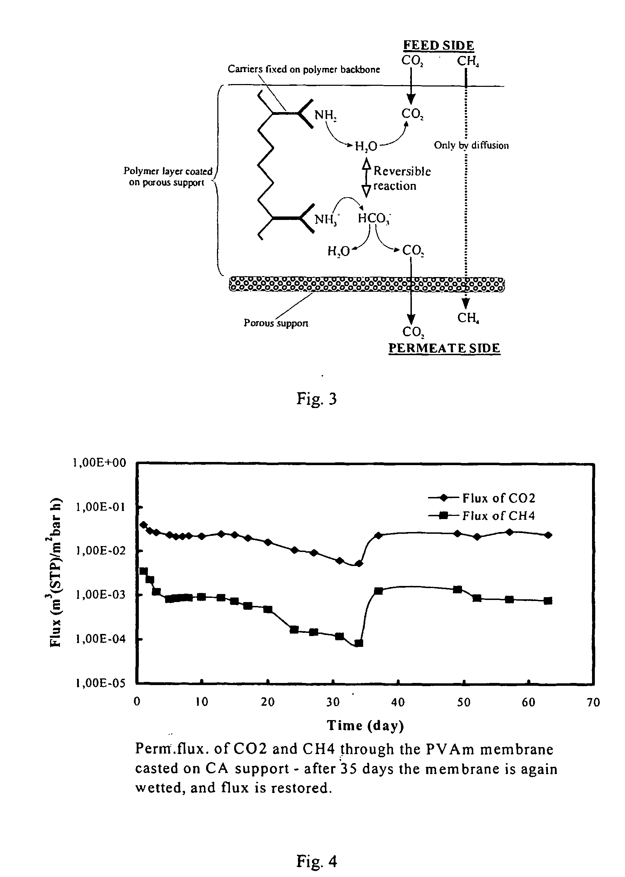

In order to obtain the carrier effect for CO₂, the membrane of the present invention should comprise water, such as being kept wet, such as swollen with water vapour. The proposed carrier mechanism in the wetted membrane is shown in Fig. 3. It was observed a decrease in permeance when membrane was allowed to dry out, while the original conditions were restored when the membrane again was wetted, see Fig. 4.

The present invention comprises membranes having a support structure wherein the MWCO is from about 20,000 to about 40,000 such as from about 20,000 to about 30,000. The preferred support structure is PSO.

The membranes further comprise PVAm of high molecular weight. In a preferred embodiment the molecular weight is higher than 70,000.

The preferred crosslinking agent of the membranes according to the present invention is NH₄F. To serve as a crosslinking agent also other compounds containing fluoride may be used according to the present invention. Examples of other fluoride containing compounds are ammonium bifluoride (NH₄HF₂) and hydrofluoric acid (HF).

Without being bound by the following theory, we believe that the use of a fluoride ion may be of benefit of two reasons. The possible role of fluoride ions in facilitated transport in a swollen membrane, is illustrated in Figure 5. The water molecule becomes more basic than pure bulk water when it is hydrogen bonded to a fluoride ion, and the fluoride is creating highly polar sites in the membrane. The basic water molecule has an increased affinity for CO₂ that leads to increased concentration of HCO₃⁻ in the membrane and a consecutively increased transport of CO₂. The permeation of gases like CH₄, N₂, and O₂ will on the other hand be blocked by the highly polar sites in the membrane because of low solubility of these nonpolar gases, and an increased selectivity may arise. The characteristics of a facilitated or carrier-mediated transport are the occurrence of a reversible chemical reaction or complexation process in combination with a diffusion process. This implies that either the diffusion or the reaction is rate limiting: For the membrane in the current study, the diffusion is assumed to be rate limiting. The total flux of a permeate *A* (here CO₂) will thus be the sum of both the Fickian diffusion and the carrier-mediated diffusion. The nonpolar gases in the gas mixture will exclusively be transported through the membrane by Fickian diffusion. It can be shown that the driving force over the membrane will be the difference in partial pressures for the Fickian diffusion, and that transport also will depend on the solubility coefficient for the gas in the polymer. For the carrier-mediated transport, the driving force will be the concentration difference of the complex AC over the membrane. The permeation of the nonpolar gases may additionally be hindered because of the highly polar sites in the membrane caused by the presence of fluoride ions. This should then lead to an increased permeance of CO₂ compared to gases like CH₄, N₂, and O₂, giving high selectivities in favor of CO₂.

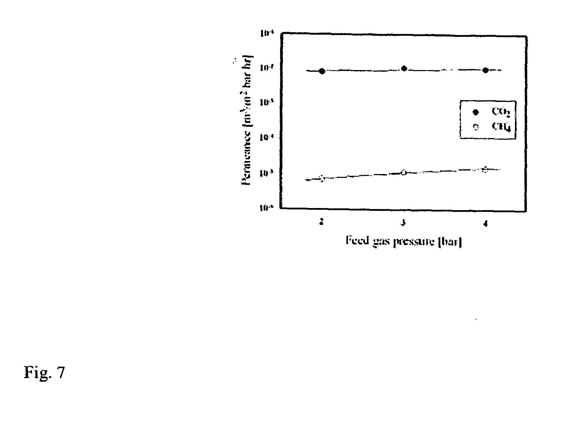

Since the partial pressure difference of CO₂ over the membrane is of importance for the flow, the effect of feed gas pressure on the permeance of CO₂ and CH₄ in a PVAm/PSO membrane were studied, see Fig. 7. In the range of 2-4 bar, the permeance of CO₂ was almost maintained. This could indicate that the carrier sites for CO₂ became saturated as pressure increased, and that transport because of the solution-diffusion mechanism became more important. The net result would be no change. The permeance of CH₄ increased slightly, most likely because of enhanced sorption according to the solution-diffusion mechanism. A slight decrease in selectivity resulted with increased pressure.

The gas passing over the membrane to the permeate side should be removed as much as possible to maintain the concentration gradient over the membrane.
In general the thickness of selective PVAm layer on the membrane should be as thin as possible in order to increase flux of carbon dioxide through the layer and membrane. The thickness may be < 15 µm, such as < 10 µm, or even < 5 µm, or for example < 2 µm.

In order to keep the membrane wet, the construction of the membrane module is of importance. The membranes according to the present invention may be prepared as a flat sheet type membrane or composite hollow fibres.

When using the membranes of the present invention for separation of CO₂, the process temperature may be kept below the boiling point, T_{b}, for water at operating pressure.

To avoid compaction of the membranes of the present invention, the pressure drop across the membrane, ΔP, may be below 80 bar.

### References

1. Richard W. Baker, Future directions of membrane gas separation technology, Ind. Eng. Chem. Res. 41 (2002) 1393.
2. A.L. Lee, H.L. Feldkirkchner, S.A. Stem, A.Y. Houde, J.P. Gamez and H.S. Meyer, Field tests of membrane modules for the separation of carbon dioxide from low quality natural gas, Ga Sep. Purif., 9 (1995) 35.
3. W.M. Thomas and D. W. Wang (Eds.), Encyclopedia of Polymer science and Engineering", Wiley, New York, Vol. 1, 1985, p. 169.
4. A.E. Achari, X. Coqueret, A. Lablance-combier and C. Loucheux, Preparation of polyvinylamine from polyacrylamide: a reinvestigation of the Hofmann reaction, Makromol. Chem., 194 (1993) 1879.
5. Hiroo Tanaka and Ryoichi Senju, Preparation of polyvinylamine by the Hofmann degradation of polyacrylamide, Bulletin of the chemical society of Japan, 49, 10 (1976) 2821.
6. Hiroo Tanaka, Cationic modification of ultrahigh-molecular-weight polyacrylamide by the Hofmann degradation, J. Polym. Sci: Polym. Letters Ed., 15 (1978) 87.
7. Hiroo Tanaka, Hofmann reaction of polyacrylamide: Relationship between reaction conditions and degree of polymerization of polyvinylamine, J. Polym. Sci: Polym. Chem. Ed., 17 (1979) 1239.
8. E.L. Cussler, Facilitated and active transport, Chp.6 in D.R.Paul and Y.P. Yampol'skii (eds.), Polymeric gas separation membranes; CRC Press, 1993.

## Claims

1. A membrane comprising a support structure coated with crosslinked polyvinylamine, wherein the crosslinking agent is a compound comprising a fluoride.

2. The membrane according to claim 1, wherein the polyvinylamine comprises water.

3. The membrane according to claim 1 or 2, wherein the polyvinylamine of the membrane is swelled by water vapour or a water containing diluent.

4. The membrane according to claim 1, 2 or 3, wherein the support structure is a flat sheet membrane or a hollow fibre membrane.

5. The membrane according to claim 1, wherein the support structure is a membrane having a molecular weight cut-off in the range of from about 20,000 to about 40,000.

6. The membrane according to any one of claims 1 - 5, wherein the support structure is a membrane having a molecular weight cut-off which is about 10,000, such about 15,000, for example about 20,000, less than the molecular weight of the polyvinylamine.

7. The membrane according to any one of the previous claims, wherein the support structure is made of polysulfone.

8. The membrane according to any one of the previous claims, wherein the molecular weight of said polyvinylamine is above about 30,000, such as above about, 50,000, for example above about 70,000 or even above 100,000.

9. The membrane according to claim 8, wherein the molecular weight of said polyvinylamine is below about 150,000.

10. The membrane according to any one of the previous claims, wherein the crosslinking agent is selected from the group comprising: ammonium fluoride, ammonium bifluoride, and hydrofluoric acid.

11. The membrane according to claim 10, wherein the crosslinking agent is ammonium fluoride.

12. A process for producing a membrane according to any one of the previous claims, comprising:
- preparing polyvinlyamine;
- coating said polyvinylamine on a support structure to obtain a membrane;
- crosslinking the polyvinylamine of the membrane with a compound comprising a fluoride.

13. The process according to claim 12, further comprising:
- swelling said polyvinylamine of said membrane by exposing said polyvinylamine for water vapour or a water containing diluent.

14. The process according to claim 12 or 13, wherein the polyvinylamine has a molecular weight above about 30,000, such as above about, 50,000, for example above about 70,000.

15. The process according to claim 12, 13 or 14, wherein the molecular weight of said polyvinylamine is below about 150,000.

16. Use of a membrane according to any one of claims 1 to 11, for separation of CO₂ from gas mixtures.

## Patentansprüche

1. Membran, umfassend eine Trägerstruktur, die mit vernetztem Polyvinylamin beschichtet ist, wobei das Vernetzungsmittel eine Verbindung ist, die ein Fluorid umfasst.

2. Membran nach Anspruch 1, wobei das Polyvinylamin Wasser umfasst.

3. Membran nach Anspruch 1 oder 2, wobei das Polyvinylamin der Membran mittels Wasserdampf oder einem Verdünnungsmittel, das Wasser enthält, aufgequollen wird.

4. Membran nach Anspruch 1, 2 oder 3, wobei die Trägerstruktur eine Flachmembran oder eine Hohlfasermembran ist.

5. Membran nach Anspruch 1, wobei die Trägerstruktur eine Membran ist, die eine Molekulargewicht-Ausschlussgrenze im Bereich von etwa 20.000 bis etwa 40.000 aufweist.

6. Membran nach einem der Ansprüche 1 bis 5, wobei die Trägerstruktur eine Membran ist, die eine Molekulargewicht-Ausschlussgrenze aufweist, die um etwa 10.000, etwa 15.000, zum Beispiel etwa 20.000 kleiner ist als das Molekulargewicht des Polyvinylamins.

7. Membran nach einem der vorhergehenden Ansprüche, wobei die Trägerstruktur aus Polysulfon hergestellt ist.

8. Membran nach einem der vorhergehenden Ansprüche, wobei das Molekulargewicht des Polyvinylamins über etwa 30.000, wie etwa 50.000, zum Beispiel über etwa 70.000 oder sogar über 100.000 liegt.

9. Membrane nach Anspruch 8, wobei das Molekulargewicht des Polyvinylamins unter etwa 150.000 liegt.

10. Membran nach einem der vorhergehenden Ansprüche, wobei das Vernetzungsmittel ausgewählt ist aus der Gruppe, umfassend: Ammoniumfluorid, Ammoniumbifluorid und Fluorwasserstoffsäure.

11. Membran nach Anspruch 10, wobei das Vernetzungsmittel Ammoniumfluorid ist.

12. Verfahren zur Herstellung einer Membran nach einem der vorhergehenden Ansprüche, umfassend:
- Herstellen des Polyvinlyamins;
- Beschichten des Polyvinylamins auf eine Trägerstruktur, um eine Membran zu erhalten;
- Vernetzten des Polyvinylamins der Membran mit einer Verbindung, die ein Fluorid umfasst.

13. Verfahren nach Anspruch 12, ferner umfassend:
- Aufquellen des Polyvinylamins der Membran, indem das Polyvinylamin Wasserdampf oder einem Verdünnungsmittel ausgesetzt wird, das Wasser enthält.

14. Verfahren nach Anspruch 12 oder 13, wobei das Polyvinylamin ein Molekulargewicht über etwa 30.000 aufweist, wie etwa über 50.000, zum Beispiel über etwa 70.000.

15. Membrane nach Anspruch 12, 13 oder 14, wobei das Molekulargewicht des Polyvinylamins unter etwa 150.000 liegt.

16. Verwendung einer Membran nach einem der Ansprüche 1 bis 11 zur Abtrennung von CO₂ aus Gasgemischen.

## Revendications

1. Membrane comprenant une structure de support revêtue de polyvinylamine réticulée, dans laquelle l'agent de réticulation est un composé comprenant un fluorure.

2. Membrane selon la revendication 1, dans laquelle la polyvinylamine comprend de l'eau.

3. Membrane selon la revendication 1 ou 2, dans laquelle la polyvinylamine de la membrane est gonflée par la vapeur d'eau ou par un diluant contenant de l'eau.

4. Membrane selon la revendication 1, 2 ou 3, dans laquelle la structure de support est une membrane en feuilles plates ou une membrane en fibres creuses.

5. Membrane selon la revendication 1, dans laquelle la structure de support est une membrane ayant un seuil de coupure moléculaire dans la plage d'environ 20 000 à environ 40 000.

6. Membrane selon lune quelconque des revendications 1 à 5, dans laquelle la structure de support est une membrane ayant un seuil de coupure moléculaire qui est inférieur d'environ 10 000, tel que d'environ 15 000, par exemple d'environ 20 000, à la masse moléculaire de la polyvinylamine.

7. Membrane selon l'une quelconque des revendications précédentes, dans laquelle la structure de support est formée par du polysulfone.

8. Membrane selon l'une quelconque des revendications précédentes, dans laquelle la masse moléculaire de ladite polyvinylamine est supérieure à environ 30 000, tel que supérieure à environ 50 000, par exemple supérieure à environ 70 000 voire supérieure à 100 000.

9. Membrane selon la revendication 8, dans laquelle la masse moléculaire de ladite polyvinylamine est inférieure à environ 150 000.

10. Membrane selon l'une quelconque des revendications précédentes, dans laquelle l'agent de réticulation est choisi dans le groupe comprenant : le fluorure d'ammonium, le bifluorure d'ammonium, et l'acide fluorhydrique.

11. Membrane selon la revendication 10, dans laquelle l'agent de réticulation est le fluorure d'ammonium.

12. Procédé de production d'une membrane selon la revendication 1, qui comprend :
- la préparation de la polyvinylamine ;
- le revêtement de ladite polyvinylamine sur une structure de support pour obtenir une membrane ;
- la réticulation de la polyvinylamine de la membrane avec un composé comprenant un fluorure.

13. Procédé selon la revendication 12, comprenant en outré :
- le gonflement de ladite polyvinylamine de ladite membrane par exposition de ladite polyvinylamine à de la vapeur d'eau ou à un diluant contenant de l'eau.

14. Procédé selon la revendication 12 ou 13, dans lequel la polyvinylamine a une masse moléculaire supérieure à environ 30 000, tel que supérieure à environ 50 000, par exemple supérieure à environ 70 000.

15. Procédé selon la revendication 12, 13 ou 14, dans lequel la masse moléculaire de ladite polyvinylamine est inférieure à environ 150 000.

16. Utilisation d'une membrane selon l'une quelconque des revendications 1 à 11, pour la séparation de CO₂ de mélanges gazeux.
